Europäisches Patentamt

European Patent Office

Office européen des brevets

(11) Publication number: **0 363 684**
**A1**

# EUROPEAN PATENT APPLICATION

(21) Application number: 89117247.0

(51) Int. Cl.[5]: **B01D 53/36**

(22) Date of filing: 18.09.89

(30) Priority: 22.09.88 JP 236465/88

(43) Date of publication of application:
18.04.90 Bulletin 90/16

(84) Designated Contracting States:
DE IT

(71) Applicant: MITSUBISHI JUKOGYO KABUSHIKI
KAISHA
5-1, Marunouchi 2-chome Chiyoda-ku
Tokyo 100(JP)

(72) Inventor: Yamamura, Misao Nagasaki
Shipyard & Engine Works
Mitsubishi Jukogyo K.K. 1-1, Akunoura-machi
Nagasaki-shi Nagasaki-ken(JP)
Inventor: Naito, Osamu Nagasaki Shipyard &
Engine Works
Mitsubishi Jukogyo K.K. 1-1, Akunoura-machi
Nagasaki-shi Nagasaki-ken(JP)
Inventor: Koyanagi, Toshio Nagasaki Shipyard
& Engine Works
Mitsubishi Jukogyo K.K. 1-1, Akunoura-machi
agasaki-shi Nagasaki-ken(JP)

(74) Representative: Henkel, Feiler, Hänzel &
Partner
Möhlstrasse 37
D-8000 München 80(DE)

(54) Exhaust gas denitrification apparatus.

(57) An improved exhaust gas denitrification appara-
tus for denitrifying nitrogen oxides in exhaust gas
through a catalytic reduction method by making use
of ammonia or precursor thereof as a reducing
agent. A branch pipe for leading the exhaust gas to
an evaporator is disposed at the upstream or at the
downstream of the denitrification apparatus. The
evaporator contains therein an ejection nozzle for
spraying ammonia or precursor thereof, and a mixer
for uniformly mixing sprayed mist of ammonia or
precursor thereof with the exhaust gas. At least one
ejection nozzle for ejecting ammonia or precursor
thereof evaporated by the exhaust gas within the
evaporator and carried by the exhaust gas is pro-
vided in the flue and disposed at the upstream of a
denitrification catalyst layer.

## EXHAUST GAS DENITRIFICATION APPARATUS

BACKGROUND OF THE INVENTION:

Field of the Invention:

The present invention relates to an exhaust gas denitrification apparatus for removing nitrogen oxides contained in exhaust gas, and more particularly to such apparatus that is advantageously applicable to denitrification of exhaust gas exhausted from a gas turbine, a diesel engine, a gas engine, a boiler, a heating furnace, a waste incinerator, an FCC, a chemical reaction processor and the like.

Description of the Prior Art:

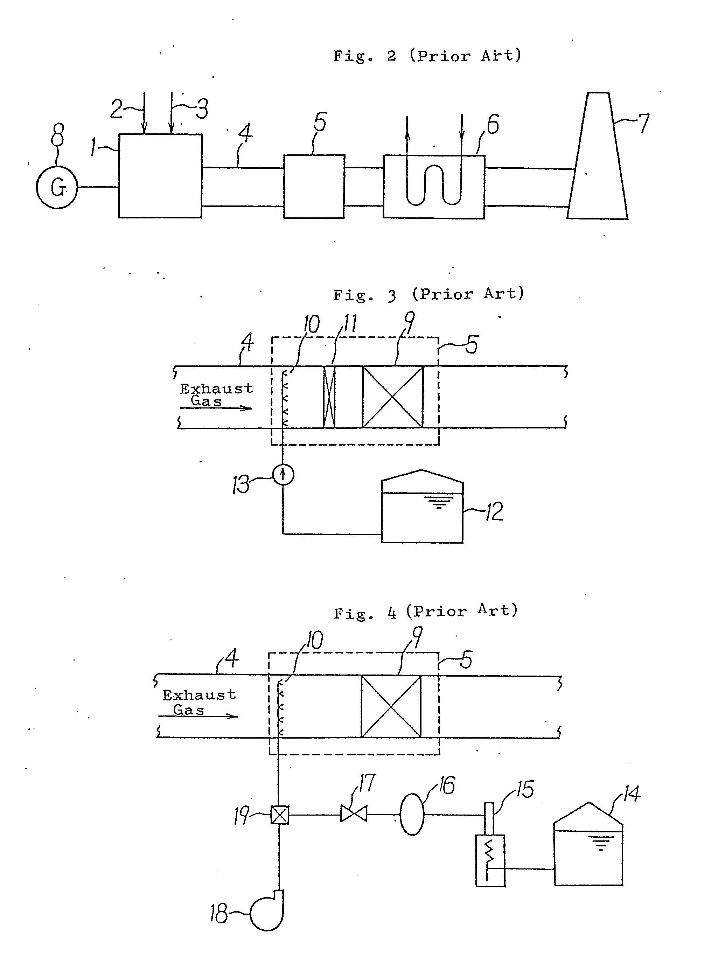

As one example of the exhaust gas denitrification apparatus in the prior art, a denitrification apparatus for combustion exhaust gas exhausted from a gas turbine in a gas turbine generation unit is chosen, and this will be described with reference to Fig. 2. In Fig. 2, fuel 2 and air 3 are fed to a gas turbine 1, combustion exhaust gas produced as a result of combustion in this gas turbine is sent to a flue 4, then it passes, at first, through a denitrification apparatus 5 provided with an ammonia injector, and next through a heat exchanger 6, and it is dissipated into the atmosphere through a stack 7. It is to be noted that in Fig. 2, reference numeral 8 designates a generator driven by the gas turbine 1.

The denitrification apparatus 5 disposed in the flue 4 is such apparatus that by injecting ammonia, nitrogen oxides (hereinafter called $NO_x$) in combustion exhaust gas is reduced to harmless nitrogen and water utilizing catalyst, and since the combustion exhaust gas denitrified by the above-mentioned denitrification apparatus 5 is at a high temperature, heat possessed by the exhaust gas is recovered by a heat-exchanger 6 and is dissipated to the atmosphere through a stack 7.

One example of a device for directly spraying aqueous ammonia to the denitrification apparatus 5 in the above-described system is illustrated in Fig. 3. In Fig. 3, a spray nozzle 10 is provided on the upstream side of a denitrification catalyst layer 9 disposed within the flue 4, and the construction is such that aqueous ammonia stored in an aqueous ammonia tank 12 may be sent under a pressure to the above-mentioned spray nozzle 10 by means of a pump 13. It is to be noted that reference numeral 11 designates a mixer.

In addition, another example of a device in which liquefied ammonia is vaporized, then diluted by air and then sprayed, is shown in Fig. 4. In this device, the construction is such that ammonia fed from a liquefied ammonia tank 14 and having passed through an ammonia evaporator 15, an accumulator 16 and a valve 17 is diluted in a diluter 19 with air introduced by a fan 18 and then injected through an ammonia spray nozzle 10 within the flue 4.

In the case of directly dispersing aqueous ammonia (or aqueous urea which is precursor of aqueous ammonia) in the exhaust gas as described above and shown in Fig. 3, since the reaction of the liquid evaporating is slow and takes a time of 0.5 - 1.0 second, it was necessary to select the distance from the ejection nozzle to the denitrification catalyst to be large, to spray in very fine mist or the equip a mixer for preliminarily mix the reducing agent with the exhaust gas.

Also, in the method of employing liquefied ammonia as a reducing agent as shown in Fig. 4, a storage facility as well as an evaporation facility would become high-pressure facilities, hence the facilities were dangerous in handling, and in view of transportation (tank-lorry transportation) also the facilities were dangerous. In addition, according to that method, evaporated ammonia was carried to the flue by making use of diluting air, and hence there was a shortcoming that as a result of increase of the amount of the exhaust gas and cooling of the exhaust gas, thermal income and outgo as well as material income and outgo of the waste heat recovery facility were unbalanced.

SUMMARY OF THE INVENTION:

In view of the above-described technical level of the prior art, the present invention is to provide a denitrification apparatus associated with an ammonia (or precursor thereof) injection device which can efficiently making $NO_x$ in the exhaust gas harmless.

According to one feature of the present invention, there is provided an exhaust gas denitrification apparatus for denitrifying nitrogen oxides in exhaust gas through a catalytic reduction method by making use of ammonia or precursor thereof as a reducing agent, which apparatus comprises a branch pipe disposed at the upstream or at the downstream of the denitrification apparatus in a flue of exhaust gas for leading the exhaust gas to an evaporator via a blower such as a recirculation fan, an evaporator containing therein an ejection nozzle for spraying ammonia or precursor thereof and a mixer for uniformly mixing sprayed mist of ammonia or precursor thereof with the exhaust gas, and at least one ejection nozzle provided in the flue and disposed at the upstream of a denitrification catalyst layer for ejecting ammonia or precursor thereof evaporated by the exhaust gas within the evaporator and carried by the exhaust gas.

According to the present invention, in operation, when a part of high-temperature exhaust gas at 300 - 500°C within a flue is branched and led to an evaporator by means of a blower such as a recirculation fan, since within the evaporator are contained an ejection nozzle for spraying aqueous ammonia (or aqueous precursor thereof) into finely atomized particles and a liquid (aqueous ammonia or aqueous precursor thereof)-gas (exhaust gas) mixer, here vapor of aqueous ammonia (or aqueous precursor thereof) carried by exhaust gas can be obtained efficiently.

By feeding this vapor from the ejection nozzles at the upstream of the denitrification catalyst layer maintained at appropriate disposition, vapor of aqueous ammonia (or aqueous precursor thereof such as, for example, aqueous urea : hereinafter called simply aqueous ammonia) and the exhaust gas can be mixed efficiently with a short period of time within the flue, and by passing through the denitrification catalyst layer, denitrification can be achieved efficiently.

The above-mentioned and other objects, features and advantages of the present invention will become more apparent by reference to the following description of one preferred embodiment of the invention taken in conjunction with the accompanying drawings.

BRIEF DESCRIPTION OF THE DRAWINGS:

In the accompanying drawings:

Fig. 1 is a schematic view showing one preferred embodiment of an exhaust gas denitrification apparatus according to the present invention;

Fig. 2 is a schematic view showing one example of an exhaust gas denitrification apparatus in the prior art; and

Figs. 3 and 4 are schematic views showing two different modes of injecting ammonia serving as a reducing agent in the exhaust gas denitrification apparatus in the prior art.

DESCRIPTION OF THE PREFERRED EMBODIMENT:

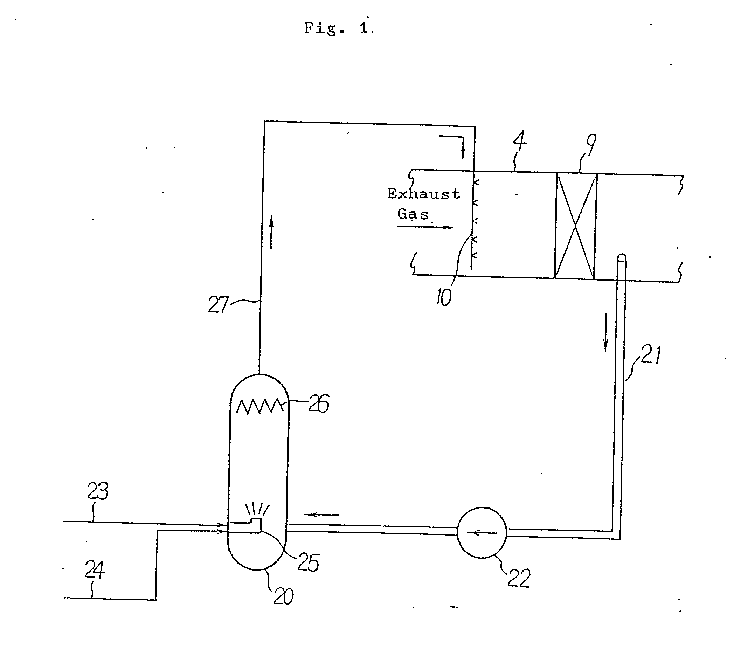

In the following, one preferred embodiment of the exhaust gas denitrification apparatus according to the present invention will be described with reference to Fig. 1.

Exhaust gas of a gas turbine, a diesel engine or the like not shown is introduced to a flue 4. In the illustrated exhaust gas denitrification apparatus, an ammonia injection device is composed of a branch pipe 21 for introducing high-temperature exhaust gas to an evaporator 20, an evaporator 20 for mixing and evaporating aqueous ammonia and exhaust gas, and an ammonia injector section for injecting vapor of evaporated aqueous ammonia to the flue 4.

In more particular, the branch pipe 21 is mounted on the downstream side of a denitrification catalyst layer 9 disposed in the flue 4. However, this branch pipe 21 could be mounted on the upstream side of the denitrification catalyst layer 9 between spray nozzles 10 and the catalyst layer 9 or on the upstream side of the spray nozzle 10. A part of the exhaust gas at 300°C - 500°C denitrified by the denitrification catalyst layer 9 is boosted in pressure, sent under a pressure and introduced into the evaporator 20 by means of a blower such as a recirculation fan 22 mounted to the same branch pipe 21. Within the above-mentioned evaporator 20 is mounted an atomizing gun 25 to which an aqueous ammonia pipe 23 and a steam pipe 24 are connected, further on the downstream side of the atomizing gun 25 is accommodated a mixer 26, to which finely atomized aqueous ammonia is sprayed with atomizing steam by means of the atomizing gun 25. The aqueous ammonia once evaporated by a part of the high-temperature exhaust gas introduced through the branch pipe 21, is uniformly and fully mixed with the exhaust gas in the mixer at the downstream, and thus vapor of aqueous ammonia carried by the exhaust gas is formed.

To this evaporator 20 is connected a duct 27, which is led to the upper stream of the catalyst layer 9 within the flue 9, and one or more ejection nozzles 10 whose number is matched with the cross-section area of the flue 4, are disposed. Vapor of aqueous ammonia is injected through these ejection nozzles 10 at a rate corresponding to the flow rate of the exhaust gas, hence the vapor of aqueous ammonia is uniformly mixed with the exhaust gas in an efficient manner within a short period of time in the flue 4, and thereafter it passes through the catalyst layer 9. At this time, $NO_x$ in the exhaust gas can be efficiently reduced into harmless nitrogen and water by ammonia and the catalytic reaction.

As will be apparent from the above description, according to the present invention, owing to the provision that a part of the high-temperature exhaust gas is utilized as gas for evaporation purpose and is returned again to the flue, the flow rate of the exhaust gas becomes invariant, and necessity for hot gas for evaporation purpose is eliminated.

Moreover, since aqueous ammonia is evaporated in an evaporator outside of a flue, time for evaporating within a flue becomes unnecessary, a reducing agent (vapor of aqueous ammonia) can be ejected even from a very short distance position from a catalyst layer, and thereby denitrification reaction can be effected in a narrow space.

Furthermore, aqueous ammonia can be used similarly to liquefied ammonia, hence high-pressure facilitys such as a storage facility, an evaporator and the like become unnecessary, and handling of the denitrification apparatus becomes convenient.

While a principle of the present invention has been described above in connection to one preferred embodiment of the invention, it is a matter of course that many apparently widely different embodiments of the invention can be made without departing from the spirit of the present invention.

## Claims

1. An exhaust gas denitrification apparatus for denitrifying nitrogen oxides in exhaust gas through a catalytic reduction method by making use of ammonia or precursor thereof as reducing agent; characterized by the provision of a branch pipe disposed at the upstream or at the downstream of the denitrification apparatus in a flue of exhaust gas for leading the exhaust gas to an evaporator via a blower such as a recirculation fan, an evaporator containing therein an ejection nozzle for spraying ammonia or precursor thereof and a mixer for uniformly mixing sprayed mist of ammonia or precursor thereof with the exhaust gas, and at least one ejection nozzle provided in said flue and disposed at the upstream of a denitrification catalyst layer for ejecting ammonia or precursor thereof evaporated by the exhaust gas within said evaporator and carried by the exhaust gas.

2. An exhaust gas denitrification apparatus as claimed in Claim 1, characterized in that ammonia or precursor thereof and atomizing steam are fed to said ejection nozzle within the evaporator for spraying ammonia or precursor thereof.

3. An exhaust gas denitrification apparatus as claimed in Claim 1, characterized in that aqueous ammonia or aqueous solution of precursor of ammonia is fed to the ejection nozzle within said evaporator.

Fig. 1.

EP 0 363 684 A1

Fig. 2 (Prior Art)

Fig. 3 (Prior Art)

Exhaust
Gas

Fig. 4 (Prior Art)

Exhaust
Gas

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 199 186 (LINDE AG) <br> * whole document " <br> --- | 1,2 | B 01 D 53/36 |
| X | EP-A-0 278 241 (DEUTSCHE BABCOCK ANLAGEN) <br> * claims 1,2,6,7; figure 1 * <br> --- | 1-3 | |
| X | DE-A-3 618 514 (KALI CHEMIE AG) <br> * whole document * <br> ----- | 1-3 | |

**TECHNICAL FIELDS SEARCHED (Int. Cl.5)**

B 01 D 53/00

The present search report has been drawn up for all claims

| Place of search | Date of completion of the search | Examiner |
|---|---|---|
| BERLIN | 16-12-1989 | BERTRAM H E H |